# EUROPÄISCHE PATENTSCHRIFT

(11) **EP 0 744 018 B1**
(45) Veröffentlichungstag und Bekanntmachung des Hinweises auf die Patenterteilung: **01.12.1999**
(21) Anmeldenummer: 95932742.0
(22) Anmeldetag: 14.09.1995
(51) Int. Cl.: G01G 19/44, G01G 23/00

(54) **WAAGE MIT GENERATOR**
WEIGHING SCALE WITH GENERATOR
BALANCE AVEC GENERATEUR

(30) Priorität: 15.09.1994 DE 4432858
(43) Veröffentlichungstag der Anmeldung: 27.11.1996
(73) Patentinhaber: SOEHNLE-WAAGEN GMBH + CO., 71540 Murrhardt (DE)
(72) Erfinder: SOEHNLE, Armin, D-71540 Murrhardt (DE)
(74) Vertreter: Dreiss, Fuhlendorf, Steimle & Becker, Patentanwälte
(86) Internationale Anmeldenummer: EP9503611
(87) Internationale Veröffentlichungsnummer: WO9608698

(56) Entgegenhaltungen:
- WO-A-83/01158
- DE-A- 2 949 612
- DE-A- 3 815 782
- DE-A- 4 401 923
- GB-A- 2 088 651

## Beschreibung

Die Erfindung betrifft eine Personenwaage der im Oberbegriff des Patentanspruches 1 angegebenen Art.

Eine solche Personenwaage ist in der DE 44 01 923 A1, die nach dem Anmeldetag der vorliegenden Erfindung veröffentlicht wurde, beschrieben.

Durch die Erfindung soll eine Waage der eingangs genannten Art derart weitergebildet werden, daß ein Kraftnebenschluß zwischen dem auf den Generator einwirkenden Teil und dem Meßwertaufnehmer vermieden wird, d. h., daß die Kraft, durch die der Generator beim Auftreten auf die Personenwaage betätigt und die Feder zusammengedrückt wird, die Ableitung des Meßsignals nicht beeinträchtigt.

Erfindungsgemäß wird diese Aufgabe durch die im Kennzeichen des Patentanspruches 1 angegebenen Merkmale gelöst. Auf diese Weise wird also erreicht, daß zunächst der Generator betätigt bzw. die Feder zusammengepreßt wird, und dann das gesamte Gewicht auf den Meßwertaufnehmer einwirkt, so daß die auf den Meßwertaufnehmer einwirkende Kraft von der Relativbewegung, mit der der Generator betätigt wird, unbeeinflußt bleibt. Anspruch 2 betrifft eine vorteilhafte Weiterbildung.

Ein Ausführungsbeispiel wird im folgenden unter Hinweis auf die beigefügten Zeichnungen näher beschrieben. Es zeigen:
- Figur 1: einen Längsschnitt durch ein Ausführungsbeispiel (entsprechend dem Pfeil I-I in Figur 3);
- Figur 2: eine Ansicht in Richtung des Pfeiles II in Figur 1;
- Figur 3: einen Schnitt entlang der Linie III-III in Figur 1; und
- Figur 4: eine Schaltkreisanordnung zur Energieversorgung der Personenwaage von Figur 1.

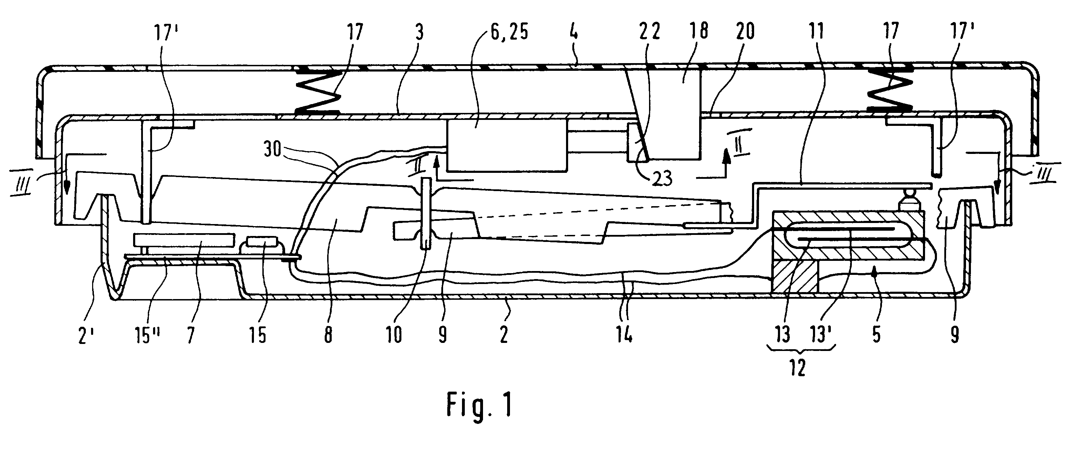

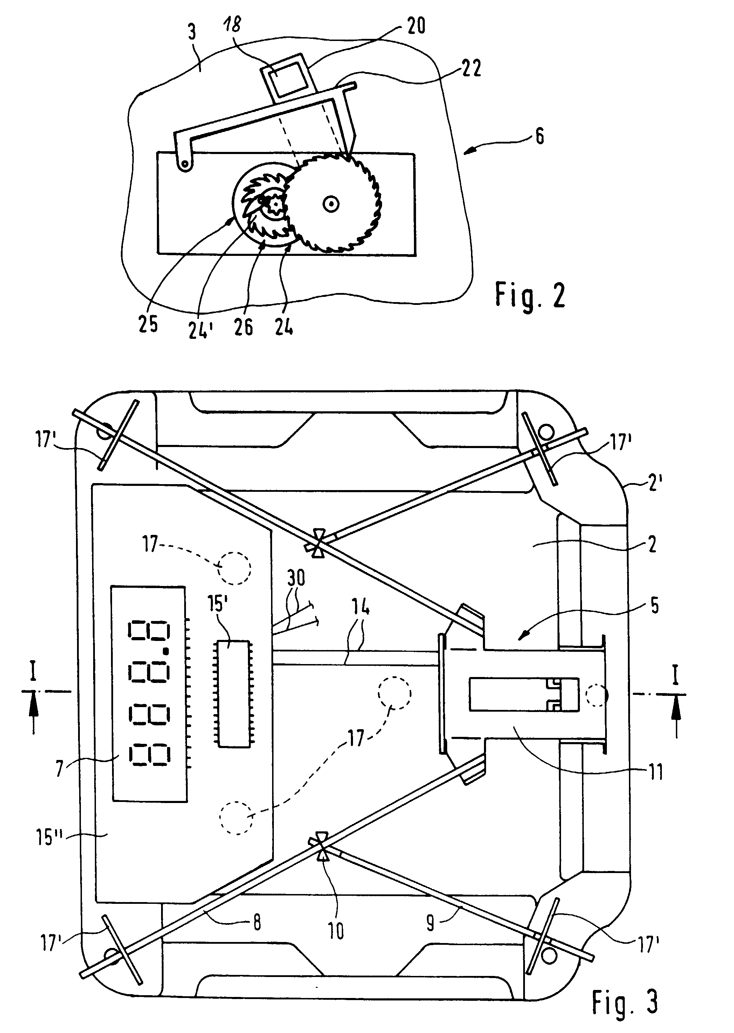

Figur 1 zeigt eine Personenwaage 1, die ein Unterteil 2 mit nach oben gebogenem Rand 2', ein Oberteil 3, eine Deckplatte 4, einen Meßwertaufnehmer 5, eine Energieerzeugungsvorrichtung 6 und eine Anzeigeeinrichtung 7 aufweist. Im Unterteil 2 sind je zwei lange und zwei kurze Wiegehebel 8 und 9 (siehe Figur 3) angeordnet, die über ein Gehänge 10 beweglich miteinander verbunden sind. Die Wiegehebel 8 und 9 sowie das Gehänge 10 dienen zur Krafteinleitung in eine Druckplatte 11, die das Gewicht auf den Meßwertaufnehmer 5 überträgt. Der Meßwertaufnehmer 5 wird im Ausführungsbeispiel durch einen Kondensator 12 gebildet, der zwei paralelle Platten 13, 13' aufweist, die in der Öffnung des Meßwertaufnehmers 5 in bekannter Weise so angeordnet sind, daß sich ihr Abstand und damit ihre Kapazität beim Belasten der Personenwaage 1 verändert. Dieser Kondensator 12 ist über Leitungen 14 (siehe Figur 3) mit einer Auswerteschaltung 15, die symbolisch durch einen IC-Baustein 15' auf der Platine 15" angedeutet ist, verbunden. Das Meßsignal hängt von der Kapazität des Kondensators 12 ab. Dies ist im einzelnen bekannt und braucht daher nicht weiter ausgeführt werden. Das Meßsignal wird in der Auswerteschaltung 15 ausgewertet und der ermittelte Meßwert mittels der Anzeigeeinrichtung 7 angezeigt. Andere elektrische bzw. elektronische Meßwertaufnehmer, z.B. Dehnmeßstreifen sind auch möglich.

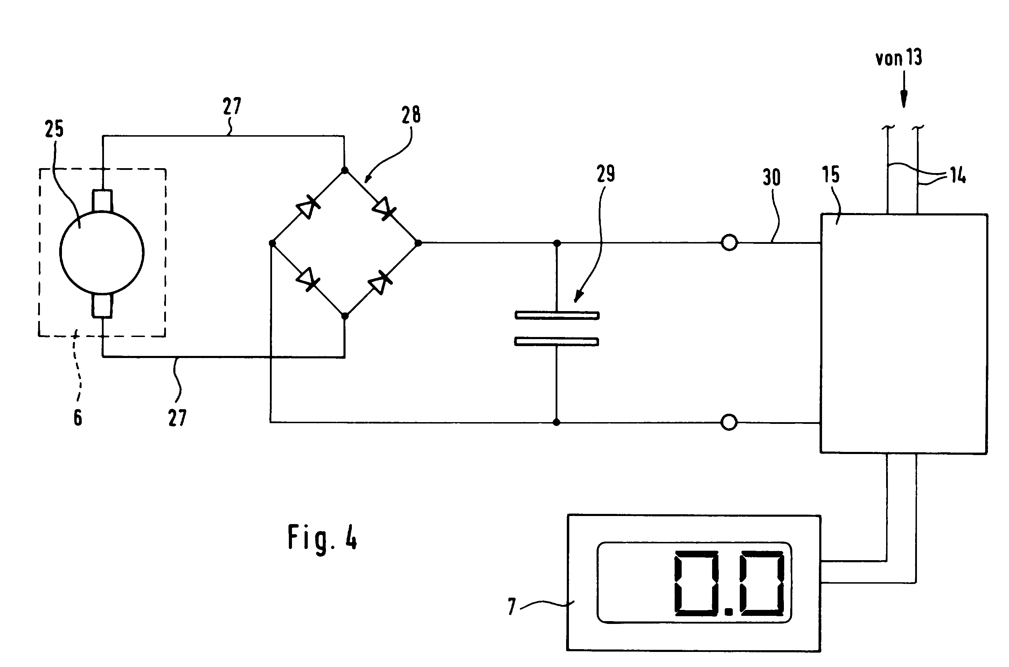

Zwischen Oberteil 3 und Deckplatte 4 sind Ausführungsbeispiel drei Federn 17, angeordnet. Das Oberteil 3 wirkt über vier in den Ecken angeordnete Stützen 17' auf die Wiegehebel 8, 9 ein. Auf der Unterseite der Deckplatte 4 ist eine Nocke 18 angebracht. Sie erstreckt sich durch eine Ausnehmung 20 im Oberteil 3 hindurch. Auf der Unterseite des Oberteils 3 befindet sich die Energieerzeugungsvorrichtung 6. Sie wird durch einen Generator 25 gebildet, wie er beispielsweise aus batterielosen, handbetriebenen Taschenlampen bekannt ist. Der Generator 25 ist über Leitungen 30 (siehe auch Figur 4) mit der Auswerteschaltung 15 verbunden.

Figur 2 zeigt die Energieerzeugungsvorrichtung 6 von unten.
Die Energieerzeugungsvorrichtung 6 weist einen Betätigungshebel 22, der an einer abgeschrägten Flanke 23 der Nocke 18 anliegt, ein Getriebe 24 mit einem Freilauf 24' zur Umsetzung der Linear- in eine Rotationsbewegung und, wie erwähnt, den Generator 25 zur Umwandlung der mechanischen in elektrische Energie auf.

Figur 3 zeigt die Anordnung der Wiegehebel 8, 9, der Druckplatte 11 mit dem Meßwertaufnehmer 5, der Leitungen 14, die vom Meßwertaufnehmer 5 zur Auswerteschaltung 15 mit den IC-Bausteinen 15' auf der Platine 15'' führen, und der Anzeigeeinrichtung 7 im Unterteil 2. Die langen Wiegehebel 8 sind am Rand 2' des Unterteils 2 und auf der Druckplatte 11 gelagert, die kurzen Wiegehebel 9 am Rand des Unterteils 2 und mit dem Gehänge 10 an den langen Wiegehebeln 8.

Figur 4 zeigt die Stromversorgung. Die vom Generator 25 erzeugte Wechselspannung wird in einer Gleichrichterschaltung 28 gleichgerichtet und damit ein als Energiespeicher dienender Kondensator 29 geladen. Er bildet die Energiequelle für die Auswerteschaltung 15 die digitale Anzeigeeinrichtung 7.

Der Ablauf ist folgender: Nähert sich die Deckplatte 4, die durch die elastischen Federn 17 im unbelasteten Zustand in einem gewissen Abstand zum Oberteil 3 gehalten wird, infolge einer Belastung bei Auftreten einer Person auf die Wage dem Oberteil 3, so gleitet der die abgeschrägte Flanke 23 der Nocke 18 am Betätigungshebel 22 entlang. Dadurch wird der Betätigungshebel 22 in die Energieerzeugungsvorrichtung 6 hineingedrückt. Diese Bewegung des Betätigungshebels 22 wird durch das Getriebe 24 in eine Drehbewegung gewandelt und über den Freilauf 24' an den Anker 26 des Generators 25 übertragen. Vom Generator 25 aus wird der erzeugte Wechselstrom über Stromleitungen 27 der Gleichrichterschaltung 28 (siehe Figur 4) zugeführt. Damit wird der Kondensator 29 aufgeladen.

Der selbst verläuft wie folgt: Man tritt kurz mit einem Tritt auf die Personenwaage 1, bleibt aber nicht auf ihr stehen. Durch diese kurzzeitige Belastung wird der Generator 25 einmal betätigt. Die dadurch erzeugte elektrische Energie reicht aus, um die elektronische Auswerteschaltung 25 einzuschalten. In bekannter Weise "wartet" die Auswerteschaltung 15 jetzt, bis sich das Meßsignal nicht mehr verändert, d.h. bis ein eingeschwungener Stillstand eintritt. Ist dies der Fall, dann stellt die elektronische Auswerteschaltung 15 die digitale Anzeigeeinrichtung 7 auf den Wert 0 ("000.0"). Dann tritt die Person, die sich wiegen will, ein zweites Mal auf die Personenwaage 1. Ausgehend von dem vorher eingestellten Nullwert wird nun das Gewicht gemessen. Bei diesem zweiten Betreten der Personenwaage 1 erzeugt der Generator 25 einen zweiten kurzfristigen Energiestoß. Die Energie reicht aus, um die Signale auszuwerten und genügend lang zur Anzeige zu bringen.

Man kann auch alternativ vorsehen, daß der Wiegevorgang mit nur einem Auftreten durchgeführt wird. Man tritt dabei auf die Personenwaage 1, bleibt aber auf ihr stehen, bis sich der Stillstand eingeschwungen hat. Dazu zeigt die Waage "000.0" an. Danach steigt man von der Personenwaage 1 herunter. Jetzt mißt die Auswerteschaltung 15 die Differenz und bringt sie zur Anzeige.

Gemäß einer nicht dargestellten alternativen Ausführungsform ist die Energieerzeugungsvorrichtung 6 am Unterteil 2 angeordnet. Sie wird von einer Nocke betätigt, die die Bewegungsenergie eines Teiles der Personenwaage 1 an den Betätigungshebel 22 weitergibt. Eine solche Nocke kann dann an einer Bodenplatte angebracht sein, die zum Unterteil relativ so beweglich ist wie die Deckplatte 2 zum Oberteil 3 im oben beschriebenen Ausführungsbeispiel. Der Wiegevorgang verläuft wie oben beschrieben.

## Patentansprüche

1. Personenwaage mit einem Meßwertaufnehmer (5), der bei Belastung ein Meßsignal erzeugt, und mit einer Auswerteschaltung (15), die aus dem Meßsignal das Gewicht ermittelt und auf einer Anzeigeeinrichtung (7) anzeigt, und bei der die Energiequelle zur Versorgung der Auswerteschaltung (15) und der Anzeigeeinrichtung (7) durch einen Generator (25) gebildet wird, der die beim Wägevorgang wirksame mechanische Energie in elektrische Engergie umwandelt, wobei eine Feder (17) zusammengedrückt wird, dadurch gekennzeichnet, daß die Feder (17) zwischen einer zum Betreten vorgesehen Platte (4) und einem Teil (3) einer aus zwei Bauteilen (2, 3) gebildeten Einheit angeordnet ist, daß der Meßwertaufnehmer (5) zwischen diesen beiden Bauteilen (2, 3) angeordnet ist, daß der Generator (6, 25) auf einem (2) dieser Bauteile angeordnet und bei Betreten der Personenwaage durch einen Nocken (18) betätigt wird.

2. Personenwaage nach Anspruch 1, dadurch gekennzeichnet, daß der Nocken (18) an der Platte (4) befestigt ist.

3. Personenwaage nach Anspruch 1 oder 2, dadurch gekennzeichnet, daß die Anzeigeeinrichtung (7) nach einem einmaligen Betreten der Personenwaage und deren Einschwingen den Wert Null anzeigt und daß die Auswerteschaltung (15) nach der Entlastung der Personenwaage den Gewichtwert ermittelt und mittels der Anzeigeeinrichtung (7) anzeigt.

4. Personenwaage nach einem der Ansprüche 1 bis 3, dadurch gekennzeichnet, daß die Anzeige der Anzeigeeinrichtung (7) eine digitale Anzeige ist.

5. Personenwaage nach einem der Ansprüche 1 bis 4, dadurch gekennzeichnet, daß die Ausgangsspannung des Generators (6) in einem Gleichrichter (28) gleichgerichtet und anschließend einem Kondensator (29) als Energiespeicher zugeführt wird.

## Claims

1. A set of scales for weighing persons comprising a measurement value transducer (5) which generates a measurement signal when a loading is applied and an evaluation circuit (15) which ascertains the weight from the measurement signal and displays it on a digital display device (7), and in which the power source for supplying the evaluation circuit (15) and the display device (7) is formed by a generator (25) which converts the mechanical energy operative in the weighing operation into electrical energy, a spring (17) being compressed, characterised in that the spring (17) is arranged between a plate (4) which is intended for a person to step thereon and a portion (3) of a unit formed from two structural portions (2, 3), that the measurement value transducer (5) is arranged between those two structural portions (2, 3) and that the generator (6, 25) is arranged on one (2) of those structural portions and is actuated by a projection (18) when a person steps on the set of scales.

2. A set of scales according to claim 1 characterised in that the projection (18) is fixed to the plate (4).

3. A set of scales according to claim 1 or claim 2 characterised in that the display device (7) displays the value zero after a person has once stepped on the set of scales and after transient oscillation thereof and that after the load on the set of scales is relieved the evaluation circuit (15) ascertains the weight value and displays it by means of the display device (7).

4. A set of scales according to one of claims 1 to 3 characterised in that the display of the display device (7) is a digital display.

5. A set of scales according to one of claims 1 to 4 characterised in that the output voltage of the generator (6) is rectified in a rectifier (28) and then fed to a capacitor (29) as an energy storage means.

## Revendications

1. Pèse-personne comprenant un capteur de mesure (5), qui émet un signal de mesure en cas de sollicitation, ainsi qu'un circuit d'analyse (15), qui détermine le poids à partir du signal de mesure et l'affiche sur un dispositif d'affichage (7), et dans lequel la source d'énergie destinée à l'alimentation du circuit d'analyse (15) et du dispositif d'affichage (7) est constituée par un générateur (25) qui transforme en énergie électrique, l'énergie mécanique qui agit pendant le processus de pesée, un ressort (17) étant comprimé, caractérisé en ce que le ressort (17) est monté entre une plaque (4), sur laquelle monte la personne, et une partie (3) d'une unité formée par deux parties (2, 3), en ce que le capteur de mesure (5) est disposé entre les deux parties (2, 3), en ce que le générateur (6, 25) est monté sur une (2) de ces parties et est actionné par une pièce en saillie (18) au moment où la personne monte sur le pèse-personne.

2. Pèse-personne selon la revendication 1, caractérisé en ce que la partie en saillie (18) est fixée contre la plaque (4).

3. Pèse-personne selon la revendication 1 ou 2, caractérisé en ce que le dispositif d'affichage (7) affiche la valeur zéro après une première montée sur le pèse-personne et la période transitoire de celui-ci et en ce que le circuit d'analyse (15) détermine le poids après la décharge du pèse-personne et affiche la valeur au moyen du dispositif d'affichage (7).

4. Pèse-personne selon l'une quelconque des revendications 1 à 3, caractérisé'en ce que l'affichage du dispositif d'affichage (7) est un affichage numérique.

5. Pèse-personne selon l'une quelconque des revendications 1 à 4, caractérisé en ce que la tension de sortie du générateur (6) est redressée dans un redresseur (28) et ensuite acheminée vers un condensateur (29) utilisé comme accumulateur d'énergie.
